# EUROPEAN PATENT SPECIFICATION

(11) **EP 4 265 876 B1**
(45) Date of publication and mention of the grant of the patent: **04.06.2025**
(21) Application number: 22800051.9
(22) Date of filing: 28.02.2022
(51) Int. Cl.: E05F 15/655, E05F 15/643, E05F 15/662

(54) **POWER SLIDING DOOR ACTUATOR**
KRAFTBETRIEBENER SCHIEBETÜRBETÄTIGER
ACTIONNEUR DE PORTE COULISSANTE ÉLECTRIQUE

(43) Date of publication of application: 25.10.2023
(73) Proprietor: PHA CO., LTD., Dalseo-gu, Daegu 42724 (KR)
(72) Inventor: EOM, Hyeon Soo, Daegu 42724 (KR)
(74) Representative: Isarpatent
(86) International application number: PCT/KR2022/002879
(87) International publication number: WO 2023/163257

(56) References cited:
- EP-A1- 1 020 310
- EP-B1- 0 723 887
- JP-A- 2009 024 422
- JP-A- 2016 006 334
- JP-A- 2019 044 533
- KR-U- 20100 011 296
- US-A- 5 749 621
- US-A1- 2021 213 811

## Description

### [Technical Field]

The present invention relates to a power sliding door actuator, and more particularly, to a power sliding door actuator that is modularized, thus being easy to manufacture, install, and manage.

### [Background Art]

Various methods may be applied to opening and closing of doors, and in the case of a sliding door, space for opening and closing the door may be minimized, and thus available space may be increased.

In particular, in the case of a sliding door for vehicles, although the sliding door enables multiple passengers to simultaneously get in or out of a vehicle, opening and closing of the door may be difficult in a specific environment in a case in which a passenger manually operates the opening and closing of the door. In order to satisfy various usage environments or needs, a power sliding door has been developed.

However, the conventional power sliding door has problems that, due to a large number of components of a device constituting the power sliding door, difficulty occurs in assembling, and manufacturing costs increase.

EP 1 020 310 A1 describes a window winder having a rail cable and motor, driving the cable along a rail to move a window pane engaged on the cable, wherein the rail has a mounting on which a motor casing which houses the motor can be adjusted to a selected position and then securely fixed to the mounting.

US 2021/0213811 A1 describes a sliding-door drive device including: a motor; a speed reducing mechanism reducing rotation of the motor; opening and closing cables having respective one ends secured to a sliding door of a vehicle; an opening drum, having the opening cable wound therearound, to be rotated by the motor through the speed reducing mechanism; and a closing drum, having the closing cable wound therearound, to be rotated by the motor through the speed reducing mechanism.

EP 0 723 887 B1 describes an opening roof including a drive motor for driving a connecting device between a front carrier and a frame for sliding the front carrier along guiderails in order to open and close the opening roof.

### [Disclosure]

### [Technical Problem]

The present invention has been devised to address the above-mentioned problems of the related art and is directed to providing a power sliding door actuator that is modularized.

Objectives of the present invention are not limited to the above-mentioned objective, and other unmentioned objectives should be clearly understood by those of ordinary skill in the art from the description below.

### [Technical Solution]

The invention is set out in the appended set of claims.

A power sliding door actuator of the present invention for achieving the above objectives includes the features of claim 1.

Here, the second cover portion may include a packing member provided on an inner side to prevent foreign matter from entering according to movement of the cable.

Also, the drum may rotate at the same angular velocity as the gear.

Alternatively, the drum may have a groove formed therein to prevent the cable from falling.

Alternatively, the actuator unit may include a rotation support portion configured to induce the rotation of the drum.

Alternatively, the tensioner unit may have a portion fixed to the housing unit.

Also, the housing unit may include a fastening member formed outward to facilitate coupling in the door.

### [Advantageous Effects]

A power sliding door actuator of the present invention for addressing the above objectives has the following advantageous effects.

First, since it is possible to modularize and miniaturize the power sliding door actuator, it is easy to manufacture, install, and manage the power sliding door actuator.

Second, it is possible to maintain tension of a cable and ensure consistent door opening/closing performance with a simple configuration.

The advantageous effects of the present invention are not limited to the above-mentioned advantageous effects, and other unmentioned advantageous effects should be clearly understood by those of ordinary skill in the art from the claims below.

### [Description of Drawings]

FIG. 1 is a front perspective view of a power sliding door actuator of the present invention.
FIG. 2 is a rear perspective view of the power sliding door actuator of the present invention.
FIGS. 3 and 4 are exploded views of the power sliding door actuator of the present invention.
FIG. 5 is a view illustrating a sequence of operation of the power sliding door actuator of the present invention from the front.
FIG. 6 is a view illustrating the sequence of operation of the power sliding door actuator of the present invention from the rear.

### [Modes of the Invention]

Hereinafter, exemplary embodiments of the present invention that can specifically realize the objectives of the present invention will be described with reference to the accompanying drawings. In describing the present embodiments, the same names and the same reference numerals will be used for the same elements, and additional description thereof will be omitted.

Also, in describing the embodiments of the present invention, it should be noted in advance that, for elements having the same function, the same names and the same reference numerals are used, but the elements are not substantially completely the same as those in the related art.

Also, terms used in the embodiments of the present invention are only used to describe specific embodiments and are not intended to limit the present invention. A singular expression includes a plural expression unless the context clearly indicates otherwise.

Also, in the embodiments of the present invention, terms such as "include" or "have" should be understood as designating that features, number, steps, operations, elements, parts, or combinations thereof exist and not as precluding the possibility of existence or addition of one or more other features, numbers, steps, operations, elements, parts, or combinations thereof in advance.

The following description of a power sliding door actuator of the present invention is given in relation to a vehicle only for convenience of description, and the use of the power sliding door actuator of the present invention is not limited thereto. It is self-evident to those of ordinary skill in the art that the power sliding door actuator of the present invention may be applied to various sliding doors requiring automatic opening and closing other than a door of a vehicle, such as a door installed in a building.

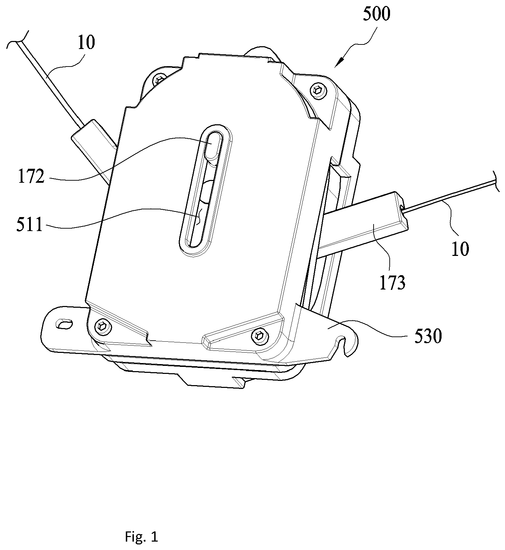

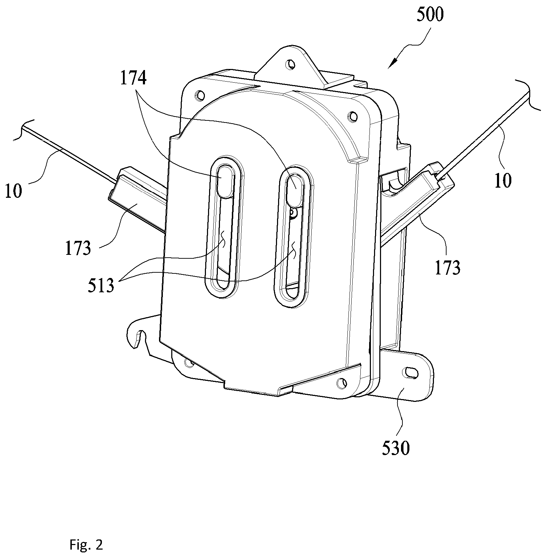

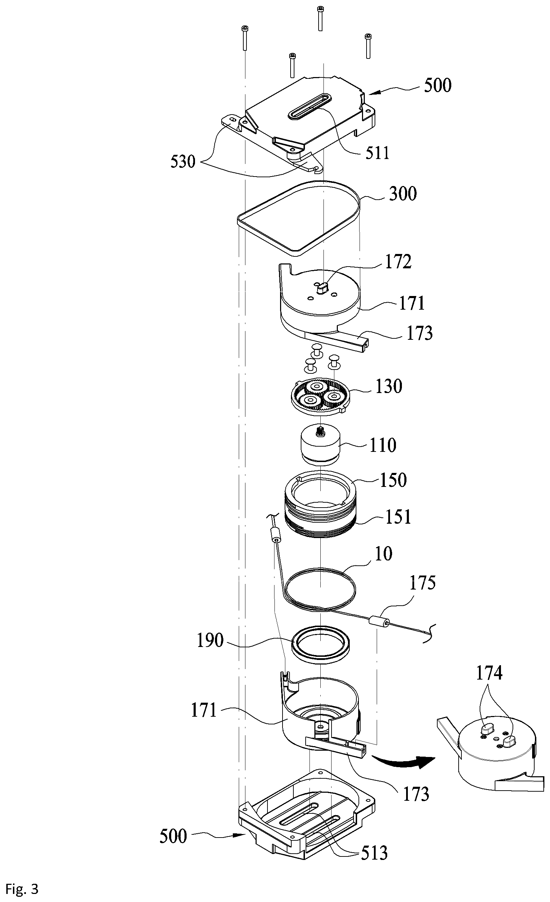

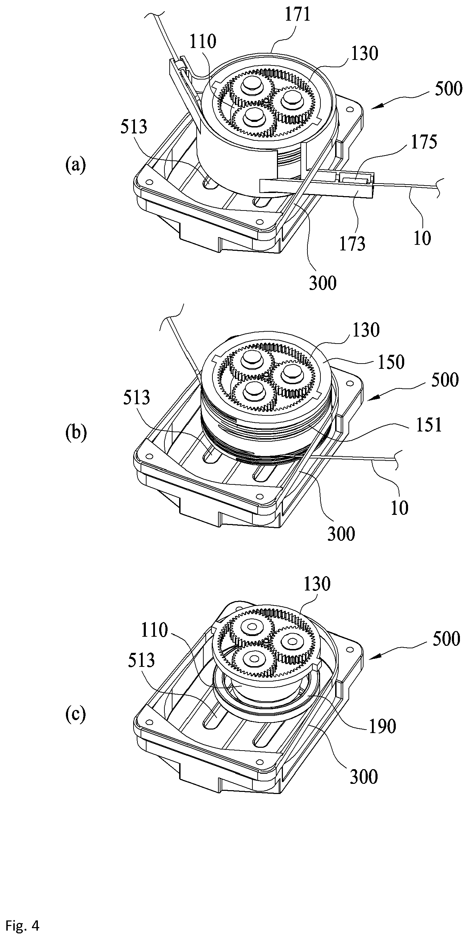

The power sliding door actuator of the present invention will be described with reference to FIGS. 1 to 4. FIG. 1 is a front perspective view of a power sliding door actuator of the present invention, and FIG. 2 is a rear perspective view of the power sliding door actuator of the present invention. FIGS. 3 and 4 are exploded views of the power sliding door actuator of the present invention.

The power sliding door actuator of the present invention includes an actuator unit 100, a tensioner unit 300, and a housing unit 500.

The actuator unit 100 includes a motor 110, a gear 130 configured to amplify torque caused by the motor 110, a drum 150 provided to be rotatable by the gear 130, and a cable 10 configured to move according to rotation of the drum 150 and open or close a door.

The motor 110 is an element that generates a driving force, and a brushless DC (BLDC) motor 110 may be used as the motor 110. However, the motor 110 is not limited thereto, and of course, various other motors 110 may be applied as the motor 110.

The gear 130 is an element that amplifies the torque caused by the motor 110, and a planetary gear 130 may be used as the gear 130. However, the gear 130 is not limited thereto, and of course, various other gears 130 may be applied as the gear 130.

The drum 150 may be provided to surround at least a portion of a circumference of the motor 110 or the gear 130 and be rotatable by the gear 130.

Here, the drum 150 may rotate at the same angular velocity as the gear 130. Specifically, a portion of an outer side of the gear 130 may protrude, and a groove or a hole may be formed in the drum 150 so that the protruding portion of the gear 130 may be inserted thereinto. Alternatively, a portion of an inner side of the drum 150 may protrude, and a groove or a hole may be formed in the gear 130 so that the protruding portion of the drum 150 may be inserted thereinto.

The cable 10 may have a portion wound around the drum 150 and have one end portion or both end portions connected to the door to open or close the door in a direction in which the drum 150 rotates. A groove 151 may be formed in the drum 150 to allow the cable 10 to, without falling from the drum 150, smoothly open or close the door in the direction in which the drum 150 rotates.

Also, the actuator unit 100 includes a cover portion 170 and a rotation support portion 190.

The cover portion 170 is provided on an outer side of the drum 150 to prevent foreign matter from entering the drum 150 and causing a failure.

The cover portion 170 includes a first cover portion 171 provided to be spaced a predetermined distance apart from the circumference of the drum 150 and a second cover portion 173 provided to extend from the first cover portion 171 and protrude toward an outer side of the housing unit 500.

Specifically, the first cover portion 171 provides a certain space to allow the drum 150 to be seated and is coupled to the housing unit 500 to reciprocate within a certain distance. In order to be coupled to the housing unit 500, the first cover portion 171 has a first protruding member 172 formed by an upper end portion of the first cover portion 171 protruding in an axial direction of the drum 150 and a second protruding member 174 formed by a lower end portion of the first cover portion 171 protruding.

That is, the first cover portion 171 prevents foreign matter from entering the drum 150 and simultaneously enables rotation and linear motion of the drum 150 according to opening and closing of the door. A mechanism relating thereto will be described below.

The second cover portion 173 may be formed so that one end portion communicates with the first cover portion 171 and the other end portion extends toward the outer side of the housing unit 500 in a certain direction.

Here, the second cover portion 173 may include a packing member 175 provided on an inner side to prevent foreign matter from entering according to movement of the cable 10.

The packing member 175 may be provided to remove foreign matter formed on a surface of the cable 10 due to an operation of the cable 10. Specifically, the packing member 175 may be formed in a cylindrical shape and provided to surround a portion of an outer side surface of the cable 10. Alternatively, the packing member 175 may be filled with a material such as rubber to surround a portion of the outer side surface of the cable 10 inward on an end portion of the second cover portion 173. However, the shape, material, position, and the like of the packing member 175 are not limited to the above and may vary.

Also, the rotation support portion 190 is an element that induces rotation of the drum 150 and may be provided as a bearing, a bush, or the like and disposed on a lower end portion of the motor 110 to help position alignment of the drum 150 in the first cover portion 171 and smooth rotation of the drum 150.

The tensioner unit 300 provides a restoration force to the actuator unit 100.

The tensioner unit 300 may be provided as an elastic body such as a band or a spring. The tensioner unit 300 may be formed as various other elements as long as the element can provide a restoration force or an elastic force to the actuator unit 100.

Here, the tensioner unit 300 may have a portion fixed to the housing unit 500. Specifically, the tensioner unit 300 may surround the first cover portion 171 while fixed to the housing unit 500 to provide a restoration force while the first cover portion 171 reciprocates in the housing unit 500.

Also, the housing unit 500 provides a path along which the actuator unit 100 is coupled to an inner portion of the housing unit 500 and the actuator unit 100 moves in a certain direction.

The housing unit 500 includes a guide portion 510 and a fastening member 530.

The guide portion 510 includes a first guide 511 and a second guide 513 to provide a path along which the actuator unit 100 may be coupled and reciprocate in a certain direction.

The first guide 511 has a hole provided in one surface of the housing unit 500, and the second guide 513 faces the first guide 511 and have a hole formed therein. Specifically, the first protruding member 172 and the second protruding member 174 formed on the first cover portion 171 are coupled to the first guide 511 and the second guide 513, respectively, and reciprocate along the first guide 511 and the second guide 513. However, it is self-evident that the shape or configuration of the first guide 511 and the second guide 513 may vary as long as the first guide 511 and the second guide 513 provide a path along which the first cover portion 171 may reciprocate.

Also, the fastening member 530 is formed outward to facilitate coupling and may be provided as a hook, a hole, or the like. Specifically, the fastening member 530 is an element formed to facilitate coupling to an element other than the door and allows the power sliding door actuator of the present invention to be stably installed at a specific position.

To sum up the coupling relationship between the elements of the power sliding door actuator of the present invention described above, as illustrated in FIGS. 4B and 4C, the motor 110 is coupled to the gear 130, and the gear 130 may be coupled to the drum 150 so that the drum 150 rotates at the same angular velocity as the gear 130. Also, for smooth rotation of the drum 150, the rotation support portion 190 may be provided on a lower end of the motor 110.

Also, as illustrated in FIG. 4A, the drum 150 is surrounded by the first cover portion 171, and the first protruding member 172 and the second protruding member 174 formed on the first cover portion 171 are configured to be coupled to the first guide 511 and the second guide 513 of the housing unit 500.

In this way, since the power sliding door actuator of the present invention can be modularized, it is easy to install the power sliding door actuator, and since the module itself may be replaced when a failure occurs, prompt maintenance and repair are possible.

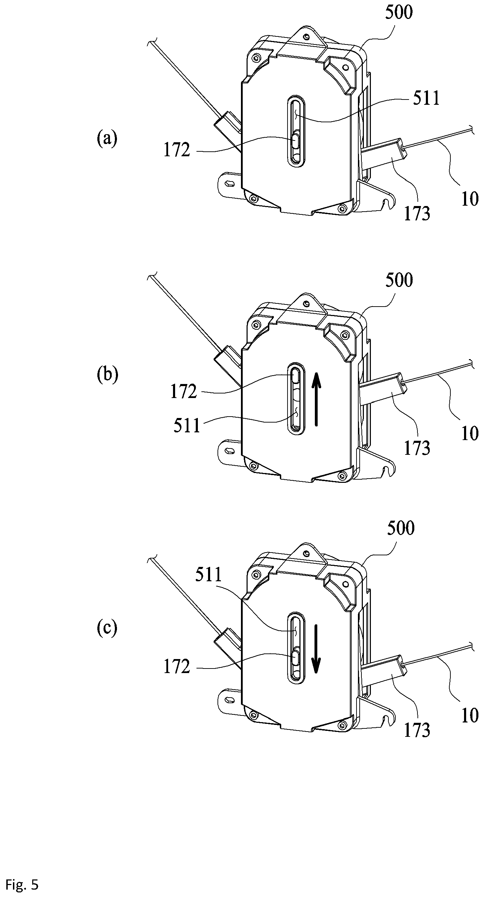

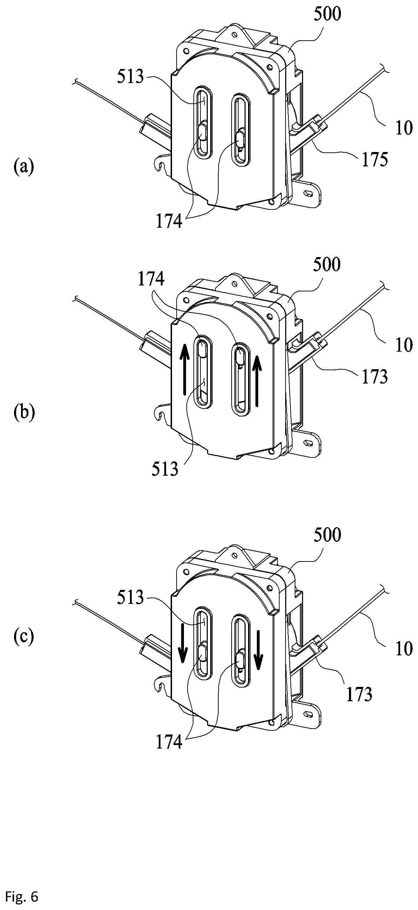

The mechanism of the power sliding door actuator of the present invention will be described with reference to FIGS. 5 and 6. FIG. 5 is a view illustrating a sequence of operation of the power sliding door actuator of the present invention from the front. Also, FIG. 6 is a view illustrating the sequence of operation of the power sliding door actuator of the present invention from the rear.

In a neutral state in which the door is neither open nor closed, the first cover portion 171 is positioned on a specific portion of the guide portion 510.

Also, in a process of opening or closing the door, due to a force pulling the door, the first cover portion 171 moves to a position at which the first protruding member 172 or the second protruding member 174 comes in contact with one end portion of the first guide 511 or the second guide 513. Also, when the opening or closing of the door is completed, the first cover portion 171 moves to the initial neutral position due to a restoration force provided by the tensioner unit 300.

Due to the tensioner unit 300, the actuator unit 100 can be disposed at a specific position in the neutral state, and thus the cable 10 can maintain tension. In this way, consistent door opening/closing performance can be ensured.

Exemplary embodiments according to the present invention have been described above, and it should be self-evident to those of ordinary skill in the art that the present invention may be embodied in other specific forms, different from the embodiments described above, without departing from the scope of the appended claims defining the present invention. Therefore, the above-described embodiments should be considered illustrative rather than limiting, and accordingly, the present invention is not limited to the above description and may be changed within the scope of the appended claims.

### [Description of reference numerals]

10: cable
100: actuator unit
110: motor
130: gear
150: drum
151: groove
170: cover portion
171: first cover portion
172: first protruding member
173: second cover portion
174: second protruding member
175: packing member
190: rotation support portion
300: tensioner unit
500: housing unit
510: guide portion
511: first guide
513: second guide
530: fastening member

## Claims

1. A power sliding door actuator comprising:
an actuator unit (100) in which a motor (110), a gear (130) configured to amplify torque caused by the motor (110), a drum (150) provided to be rotatable by the gear (130), and a cable (10) configured to move according to rotation of the drum (150) and open or close a door are provided;
a tensioner unit (300) configured to provide a restoration force to the actuator unit (100); and
a housing unit (500) configured to provide a path along which the actuator unit (100) moves,
wherein the housing unit (500) includes a guide portion (510) configured to provide a path to allow the actuator unit (100) to be coupled and reciprocate in a certain direction,
wherein the guide portion (510) includes:
a first guide (511) provided on one surface of the housing unit (500); and
a second guide (513) formed to face the first guide (511),
wherein the actuator unit (100) includes a cover portion (170) provided on an outer side of the drum (150) to prevent foreign matter from entering the drum (150),
wherein the cover portion (170) includes:
a first cover portion (171) provided to be spaced at a predetermined distance apart from a circumference of the drum (150); and
a second cover portion (173) provided to protrude from the first cover portion (171) toward an outer side of the housing unit (500),
wherein the first cover portion (171) has a first protruding member (172) formed by an upper end portion of the first cover portion (171) protruding in an axial direction of the drum (150) and a second protruding member (174) formed by a lower end portion of the first cover portion (171) protruding,
wherein the drum (150) is surrounded by the first cover portion (171), and the first protruding member (172) and the second protruding member (174) is configured to be coupled to the first guide (511) and the second guide (513) for reciprocating along the first guide (511) and the second guide (513), respectively, such that,
in a neutral state in which the door is neither open nor closed, the first cover portion (171) is positioned on a specific portion of the guide portion (510);
in a process of opening or closing the door, due to a force pulling the door, the first cover portion (171) moves to a position at which the first protruding member (172) and/or the second protruding member (174) comes in contact with one end portion of the first guide (511) or the second guide (513); and
when the opening or closing of the door is completed, the first cover portion (171) moves to the initial neutral position due to a restoration force provided by the tensioner unit (300).

2. The power sliding door actuator of claim 1, wherein the second cover portion (173) includes a packing member (175) provided on an inner side to prevent foreign matter from entering according to movement of the cable (10).

3. The power sliding door actuator of claim 1, wherein the drum (150) rotates at the same angular velocity as the gear (130).

4. The power sliding door actuator of claim 1, wherein the drum (150) has a groove (151) formed therein to prevent the cable (10) from falling.

5. The power sliding door actuator of claim 1, wherein the actuator unit (100) includes a rotation support portion (190) configured to induce the rotation of the drum (150).

6. The power sliding door actuator of claim 1, wherein the tensioner unit (300) has a portion fixed to the housing unit (500).

## Patentansprüche

1. Betätigungseinrichtung für eine elektrische Schiebetür, umfassend:
eine Betätigungseinrichtungseinheit (100), in der ein Motor (110), ein Zahnrad (130), das eingerichtet ist, um ein Drehmoment zu verstärken, das durch den Motor (110) erzeugt wird, eine Trommel (150), die vorgesehen ist, um durch das Zahnrad (130) drehbar zu sein, und ein Kabel (10), das eingerichtet ist, um sich gemäß einer Drehung der Trommel (150) zu bewegen und eine Tür zu Öffnen oder zu schließen, vorgesehen sind;
eine Spanneinrichtungseinheit (300), die eingerichtet ist, um eine Rückstellkraft für die Betätigungseinrichtungseinheit (100) vorzusehen; und
eine Gehäuseeinheit (500), die eingerichtet ist, um einen Pfad vorzusehen, entlang dessen sich die Betätigungseinrichtungseinheit (100) bewegt,
wobei die Gehäuseeinheit (500) einen Führungsabschnitt (510) aufweist, der eingerichtet ist, um einen Pfad vorzusehen, um zu ermöglichen, dass die Betätigungseinrichtungseinheit (100) gekoppelt wird und sich in einer bestimmten Richtung hin- und herbewegt,
wobei der Führungsabschnitt (510) aufweist:
eine erste Führung (511), die auf einer Fläche der Gehäuseeinheit (500) vorgesehen ist; und
eine zweite Führung (513), die gebildet ist, um der ersten Führung (511) zugewandt zu sein,
wobei die Betätigungseinrichtungseinheit (100) einen Abdeckungsabschnitt (170) aufweist, der auf einer Außenseite der Trommel (150) vorgesehen ist, um zu verhindern, dass Fremdkörper in die Trommel (150) eindringen,
wobei der Abdeckungsabschnitt (170) aufweist:
einen ersten Abdeckungsabschnitt (171), der vorgesehen ist, um in einem vorbestimmten Abstand von einem Umfang der Trommel (150) beabstandet zu sein; und
einen zweiten Abdeckungsabschnitt (173), der vorgesehen ist, um von dem ersten Abdeckungsabschnitt (171) in Richtung einer Außenseite der Gehäuseeinheit (500) vorzustehen,
wobei der erste Abdeckungsabschnitt (171) ein erstes vorstehendes Element (172), das durch einen oberen Endabschnitt des ersten Abdeckungsabschnitts (171) gebildet ist, der in einer axialen Richtung der Trommel (150) vorsteht, und ein zweites vorstehendes Element (174), das durch einen unteren Endabschnitt des ersten Abdeckungsabschnitts (171) gebildet ist, der vorsteht, aufweist,
wobei die Trommel (150) von dem ersten Abdeckungsabschnitt (171) umgeben ist und das erste vorstehende Element (172) und das zweite vorstehende Element (174) eingerichtet sind, um mit der ersten Führung (511) und der zweiten Führung (513) gekoppelt zu sein, um sich entlang der ersten Führung (511) bzw. der zweiten Führung (513) hin- und herzubewegen, so dass,
in einem neutralen Zustand, in dem die Tür weder offen noch geschlossen ist, der erste Abdeckungsabschnitt (171) auf einem bestimmten Abschnitt des Führungsabschnitts (510) positioniert ist;
in einem Vorgang des Öffnens oder Schließens der Tür, aufgrund einer Kraft, die an der Tür zieht, sich der erste Abdeckungsabschnitt (171) in eine Position bewegt, in der das erste vorstehende Element (172) und/oder das zweite vorstehende Element (174) in Kontakt mit einem Endabschnitt der ersten Führung (511) oder der zweiten Führung (513) kommen/kommt; und
wenn das Öffnen oder Schließen der Tür abgeschlossen ist, sich der erste Abdeckungsabschnitt (171) aufgrund einer Rückstellkraft, die von der Spanneinrichtungseinheit (300) erzeugt wird, in die neutrale Ausgangsposition bewegt.

2. Betätigungseinrichtung für eine elektrische Schiebetür nach Anspruch 1, wobei der zweite Abdeckungsabschnitt (173) ein Dichtungselement (175) aufweist, das auf einer Innenseite vorgesehen ist, um zu verhindern, dass Fremdkörper gemäß einer Bewegung des Kabels (10) eindringen.

3. Betätigungseinrichtung für eine elektrische Schiebetür nach Anspruch 1, wobei sich die Trommel (150) mit derselben Winkelgeschwindigkeit wie das Zahnrad (130) dreht.

4. Betätigungseinrichtung für eine elektrische Schiebetür nach Anspruch 1, wobei die Trommel (150) eine Nut (151) aufweist, die darin gebildet ist, um zu verhindern, dass das Kabel (10) herunterfällt.

5. Betätigungseinrichtung für eine elektrische Schiebetür nach Anspruch 1, wobei die Betätigungseinrichtungseinheit (100) einen Drehträgerabschnitt (190) aufweist, der eingerichtet ist, um die Drehung der Trommel (150) einzuleiten.

6. Betätigungseinrichtung für eine elektrische Schiebetür nach Anspruch 1, wobei die Spanneinrichtungseinheit (300) einen Abschnitt aufweist, der an der Gehäuseeinheit (500) befestigt ist.

## Revendications

1. Actionneur de porte coulissante électrique comprenant :
une unité actionneur (100) dans laquelle se trouvent un moteur (110), un engrenage (130) conçu pour amplifier le couple engendré par le moteur (110), un tambour (150) prévu pour être rotatif au moyen de l'engrenage (130) et un câble (10), conçu pour se déplacer en fonction de la rotation du tambour (150) et ouvrir ou fermer une porte ;
une unité tendeur (300) conçue pour fournir une force de rappel à l'unité actionneur (100) ; et
une unité boîtier (500) conçue pour fournir un chemin le long duquel l'unité actionneur (100) se déplace,
dans lequel l'unité boîtier (500) comporte une partie de guidage (510) conçue pour fournir un chemin afin de permettre à l'unité actionneur (100) d'être couplée et d'effectuer un mouvement de va-et-vient dans une certaine direction,
dans lequel la partie de guidage (510) comporte :
un premier guide (511) situé sur une surface de l'unité boîtier (500) ; et
un second guide (513) formé de façon à faire face au premier guide (511),
dans lequel l'unité actionneur (100) comporte une partie couvercle (170) située sur un côté extérieur du tambour (150) pour empêcher que des corps étrangers pénètrent dans le tambour (150),
dans lequel la partie couvercle (170) comporte :
une première partie de couvercle (171) prévue pour être espacée, à une distance prédéfinie, d'une circonférence du tambour (150) ; et
une seconde partie de couvercle (173) prévue pour faire saillie depuis la première partie de couvercle (171) vers un côté extérieur de l'unité boîtier (500),
dans lequel la première partie de couvercle (171) présente un premier élément en saillie (172) formé par une partie d'extrémité supérieure de la première partie de couvercle (171) faisant saillie dans une direction axiale du tambour (150) et un second élément en saillie (174) formé par une partie d'extrémité inférieure de la première partie de couvercle (171) faisant saillie,
dans lequel le tambour (150) est entouré de la première partie de couvercle (171), et le premier élément en saillie (172) et le second élément en saillie (174) sont conçus pour être couplés au premier guide (511) et au second guide (513) pour effectuer un mouvement de va-et-vient respectivement le long du premier guide (511) et du second guide (513), de telle sorte que,
dans un état neutre dans lequel la porte n'est ni ouverte ni fermée, la première partie de couvercle (171) est positionnée sur une partie spécifique de la partie de guidage (510) ;
dans un processus d'ouverture ou de fermeture de la porte, en raison d'une force tirant la porte, la première partie de couvercle (171) se déplace dans une position dans laquelle le premier élément en saillie (172) et/ou le second élément en saillie (174) viennent en contact avec une partie d'extrémité du premier guide (511) ou du second guide (513) ; et
lorsque l'ouverture ou la fermeture de la porte est achevée, la première partie de couvercle (171) se déplace dans la position neutre initiale en raison d'une force de rappel fournie par l'unité tendeur (300).

2. Actionneur de porte coulissante électrique selon la revendication 1, dans lequel la seconde partie de couvercle (173) comporte un élément de garniture (175) situé sur un côté intérieur pour empêcher que des corps étrangers pénètrent en fonction du déplacement du câble (10).

3. Actionneur de porte coulissante électrique selon la revendication 1, dans lequel le tambour (150) tourne à la même vitesse angulaire que l'engrenage (130).

4. Actionneur de porte coulissante électrique selon la revendication 1, dans lequel le tambour (150) présente une rainure (151) formée en son sein pour empêcher le câble (10) de tomber.

5. Actionneur de porte coulissante électrique selon la revendication 1, dans lequel l'unité actionneur (100) comporte une partie de support en rotation (190) conçue pour provoquer la rotation du tambour (150).

6. Actionneur de porte coulissante électrique selon la revendication 1, dans lequel l'unité tendeur (300) présente une partie fixée à l'unité boîtier (500).
